## Europäisches Patentamt
## European Patent Office
## Office européen des brevets

(19)

(11) Publication number: **0 031 215**
**B1**

(12) **EUROPEAN PATENT SPECIFICATION**

(45) Date of publication of patent specification: **21.03.84**

(51) Int. Cl.³: **B 62 M 9/12**

(21) Application number: **80304458.5**

(22) Date of filing: **11.12.80**

(54) Cycle derailleur.

(30) Priority: **19.12.79 JP 166120/79**

(43) Date of publication of application:
**01.07.81 Bulletin 81/26**

(45) Publication of the grant of the patent:
**21.03.84 Bulletin 84/12**

(84) Designated Contracting States:
**BE DE FR GB IT**

(56) References cited:
**FR - A - 896 001**
**GB - A - 167 471**
**GB - A - 612 814**

(73) Proprietor: **SHIMANO INDUSTRIAL COMPANY LIMITED**
**77, 3-cho Oimatsu-cho Sakai-shi**
**Osaka (JP)**

(72) Inventor: **Shimano, Keizo**
**81, 3-cho, Midorigaoka-Minamimachi**
**Saikai-shi Osaka (JP)**

(74) Representative: **Szczuka, Jan Tymoteusz et al,**
**Cruikshank & Fairweather 19 Royal Exchange**
**Square**
**Glasgow G1 3AE Scotland (GB)**

Courier Press, Leamington Spa, England.

## Cycle derailleur

This invention relates to a cycle derailleur for use in shifting a drive chain to a desired sprocket of a multi-sprocket assembly, said derailleur comprising a base member, two link members pivotally connected to said base member, and a movable member pivotally connected to said link members; a chain shift means having two pulleys and pivotally mounted on said movable member; and a chain tension spring disposed for acting between said chain shift means and said movable member for tensioning a said drive chain in use of the derailleur.

Generally in this kind of derailleur there is provided a tension spring disposed for acting between the movable member and the changeover frame, so as to continuously maintain the drive chain under tension whatever gear it may be engaged in.

If the tension spring exerts only a weak biasing force, it cannot maintain the drive chain fully under tension with the result that the slackened chain vibrates considerably at its slack side (with respect to the sprockets) during running of the cycle with a risk of the chain falling off a front (crank shaft mounted) sprocket.

On the other hand, if the chain tension spring exerts too strong a biasing force, an excessively large tension is applied to the chain with possible deflection and/or distortion of the support shafts of the front and rear sprockets which carry the drive chain. As a result, a large frictional resistance is generated at the relatively-rotating portions of the front and rear sprockets and their mounting members. This results in a reduced driving force and efficiency with increased wear and noise. Also, a large drive chain tension results in relatively large changes in tension during switching from the highest speed gear to the lowest one and vice versa thereby resulting in pour gear changing efficiency.

It is an object of the present invention to avoid or minimize one or more of the above disadvantages.

The present invention provides a derailleur for a cycle, for use in shifting a drive chain to a desired sprocket of a multi-sprocket assembly, said derailleur comprising a base member, two link members pivotally connected to said link members; a chain shift means having two pulleys and pivotally mounted on said movable member; and a chain tension spring disposed for acting between said chain shift means and said movable member for tensioning a said drive chain in use of the derailleur; characterized in that there is provided a substantially unidirectional resistance means disposed for acting between the movable member and said chain shift means so as to apply a resistance to relative rotation therebetween substantially only in a reverse direction with respect to the biasing direction of said chain tension spring, whereby the chain shift means is able to swing lightly in the biasing direction of the chain tension spring but only heavily in the reverse direction with respect to the biasing direction of said chain tension spring.

Preferably the resistance applying means includes a unidirectional rotary transmission which comprises a rotary member having engagement recesses, such as ratchet teeth, in combination with an engagement member, such as a pawl, engageable with said recesses. A friction means, e.g., a dish-shaped spring, is disposed for applying a resistance against rotation of the rotary member. The resistance applying means is incorporated in the pivotal connection between the chain shift means and the movable member, in such a manner that when the changeover frame swings in a reverse direction with respect to the biasing direction of the chain tension spring, the engagement member meshes with the engagement recesses of the rotary member to rotate the rotary member together with the chain shift means in a pivotal movement thereby applying thereto the rotational resistance exerted by the friction means, thus making the pivotal movement of the chain shift means heavier. On the other hand, when the chain shift means pivots in the biasing direction of the chain tension spring, the engagement member disengages from the engagement recesses, whereby the chain shift means pivots relatively freely with respect to the rotary member i.e. the pivotal movement is lighter.

By means of the present invention it is possible to employ a relatively weak chain tension spring without suffering from significant slackening of the drive chain when the cycle is stopped. The drive chain, even when it is subjected to vibration during riding of the cycle, can withstand such vibrations thanks to the aforesaid rotational resistance, thereby overcoming the problem of chain disengagement from a front sprocket due to chain slackening. Also, since the chain is not subjected to large tension forces, deflection of the support shafts of the front and rear sprockets is substantially avoided. As a result, a smaller frictional resistance is generated at the relatively-rotating portions of the rotary members at the front and rear sprockets and the fixed members supporting the respective rotary members and the rotational efficiency of the front and rear gears increased. At the same time wear in the relatively rotating portions and noise therein are both reduced.

Furthermore, changes in the tension of the drive chain during switching between the highest and lowest gears are also reduced thereby improving gear change efficiency.

The present invention also permits the use of a smaller tension spring for example a coiled spring of reduced axial length, whereby the spacing between the movable member supporting the tension spring and the chain shift means can be reduced thereby making the derailleur as a whole more compact.

It will of course be appreciated that whilst the resistance means preferably acts only in one direction, significant benefits and advantages can be obtained in accordance with the present invention even when the resistance means exerts a small resistance in the opposite direction.

Further preferred features and advantages of the invention will appear from the following description given by way of example of some preferred embodiments illustrated with reference to the accompanying drawings, in which like reference numerals are used to indicate like parts and in which:

Fig. 1 is a front elevation of a first embodiment of a derailleur of the invention;

Fig. 2 is a partially sectioned bottom view of the embodiment of Fig. 1;

Fig. 3 is a partially sectioned detail view corresponding to Fig. 2;

Fig. 4 is a sectional view taken on the line IV—IV in Fig. 3;

Figs. 5 to 7 are partially sectioned detail views corresponding to Fig. 3 of second, third and fourth embodiments of the invention;

Fig. 8 is a sectional view taken on the line VIII—VIII in Fig. 7;

Fig. 9 is a sectional plan view of a principal portion of a fifth embodiment of the invention; and

Fig. 10 is a general view of a derailleur of the invention in use on a cycle.

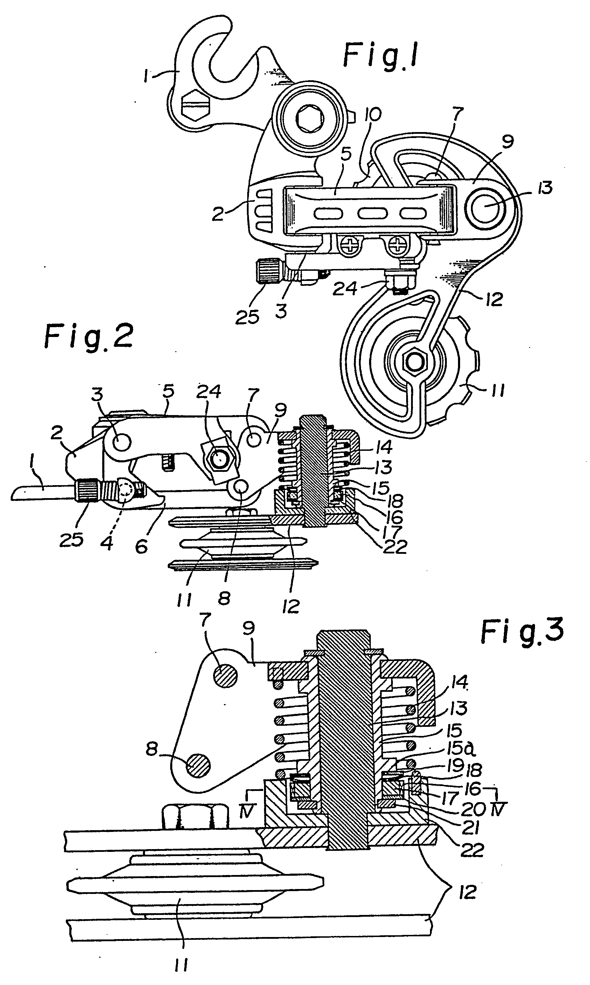

Fig. 1 shows a rear derailleur comprising a bracket member 1 mountable, in use on a cycle frame, and a base member 2 mounted on the bracket member 1. The base member 2 is pivotally connected by pins 3 and 4 to two link members 5 and 6 which are in turn pivotally connected to a movable member 9 via pins 7 and 8. The base member 1, two link members 5 and 6, and movable member 9, together constitute a rectangular derailleur linkage of the general type usually referred to as a parallelogram linkage, though the rectangle defined by the pivot pins 3, 4, 7, 8 need not necessarily be a parallelogram. A chain shift means 12 in the form of two parallel frame members having two pulleys 10 and 11 for supporting a drive chain C, is pivotally connected to the movable member 9 through a support shaft 13. A helically coiled tension spring 14 is disposed for acting between the chain shift means 12 and the movable member 9, so as to bias the chain shift means 12 in a clockwise direction as viewed in Fig. 1, for tensioning the drive chain C carried by the pulleys 10 and 11 in use of the derailleur (see Fig. 10).

In accordance with the present invention the above described derailleur is provided with a unidirectional resistance means for subjecting the chain shift means 12 to a resistance only against swinging movement thereof in a reverse direction with respect to the biasing direction of the chain tension spring 14, whereby the chain shift means 12 can swing substantially freely in the biasing direction of the chain tension spring 14 but only with difficulty in the reverse direction.

As shown in Figs. 2 to 4, a tubular shaft 15 is secured to the movable member 9 by fixing means, e.g. with caulking, and the support shaft 13 is also secured to the chain shift means 12 by a fixing means, e.g. with caulking, and mounted rotatably in the tubular shaft 15. Between the tubular shaft 15 and the chain shift means 12 is provided a resistance applying means for applying a resistance to the chain shift means 12 only against swinging thereof in a reverse direction with respect to the biasing direction of the chain tension spring 14, as mentioned above.

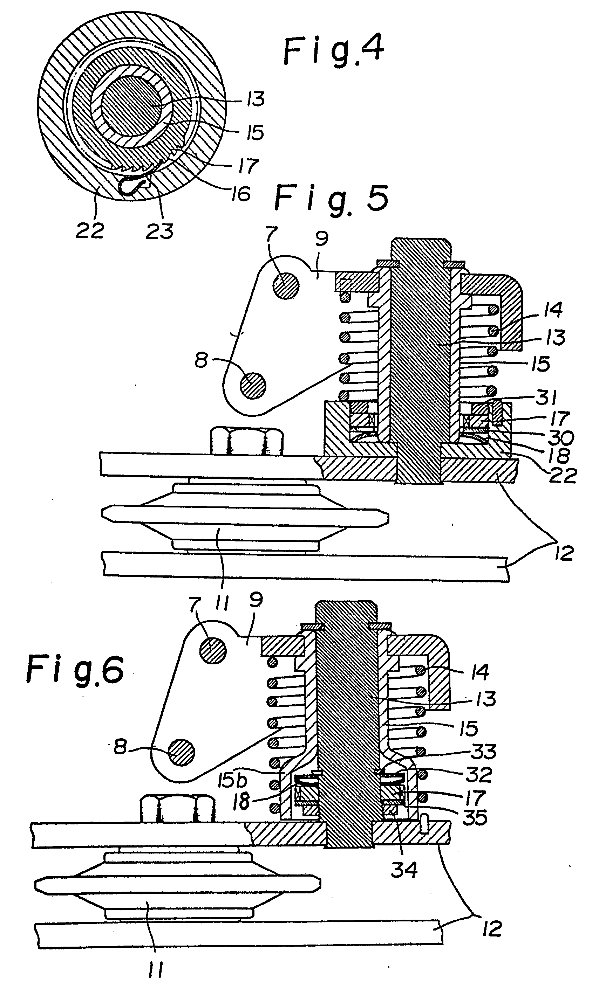

The specific resistance applying means shown in Figs. 2 and 4, comprises a unidirectional rotary transmission having an annular rotary member 17 provided with engagement recesses defined by ratchet teeth 16 and an engagement member in the form of a pawl 23 engageable with said ratchet teeth 16, the transmission incorporating a friction plate 18, such as a dish-shaped spring (e.g. a Belleville Spring), disposed for applying a rotational resistance to the rotary member 17. The tubular shaft 15 is provided at its outer periphery, in proximity to but spaced from its lower end, as viewed in Fig. 3, with an annular projection 15a, below which is disposed around its outer periphery first the friction plate 18 and then said annular rotary member 17. Washers 19 and 20 are interposed between the annular projection 15a and the friction plate 18 and between the rotary member 17 and an annular abutment means 21 provided at said lower end of the support shaft 13, the spacing between said annular projection 15a and said abutment means 21 being such that the friction plate 18 is pressed against one face of the rotary member 17 to apply thereto a frictional resistance against rotation of said rotary member 17. A tubular holder 22 is mounted on the chain shift means 12 and carries at its radially inner surface the pawl 23 which is in the form of a leaf spring and engages at its free end the ratchet teeth 16. When the chain shift means 12 swings in the working direction of the tension spring 14, the tip of pawl 23 rides over the ratchet teeth 16 to allow the chain shift means 12 to swing freely—with respect to the movable member 9—without rotating the rotary member 17. In contrast, when the chain shift means 12 swings in a reverse direction with respect to the working direction of the chain tension spring 14, the pawl 23 engages the ratchet teeth 16 to rotate the rotary member 17 together with the chain shift member 12 and relative to the movable member 9. Due, however, to the frictional resistance against rotation of the rotary member 17 exerted by the friction plate 18, the chain shift means 12 is subjected to a resistance against its swinging motion in said reverse direction.

Thus, if the spring force of the chain tension spring 14, which biases the chain shift means 12 clockwise as viewed in Fig. 1, is represented by $F$, the chain shift means 12, when swinging in the working direction of the spring 14, is subjected substantially only to the force $F$ thereby making the swinging motion of the chain shift means 12 relatively free and light. On the other hand, when the chain shift means 12 swings in the reverse direction with respect to the working direction of the chain tension spring 14, it is subjected to a force $F+f+FG$ wherein $F$ is the chain tension spring 14 spring force, $f$ is the excess force necessary for moving the chain shift means 12 against the chain tension spring 14, and $FG$ is the frictional resistance force of the rotary member 17. Thus the chain shift means 12 is subjected to a substantial resistance against swinging movement in the reverse direction and swinging in this direction is relatively heavy.

As shown in Figs. 1 and 2, the derailleur is also provided with a holder 24 for a control wire of a control cable, and a support 25 for the outer sheath of the control cable.

As may be seen in Fig. 10, the above described derailleur is supported, in use, on the cycle frame at the rear thereof via the bracket member 1, the cycle frame also supporting front gear sprockets $G_1$ and a plurality of rear gear sprockets $G_2$, around which extends the drive chain $C$. The slack (non-driving) side of the drive chain $C$ below the gear sprockets $G_1$, $G_2$ is supported by the pulleys 10 and 11 and subjected to the tension generated by the chain tension spring 14 which always biases the chain shift means 12 clockwise with the lower part thereof being biased in the direction of the arrow $X$ as shown in Fig. 10.

When the chain shift means 12 swings in the working direction of the chain tension spring 14 to apply tension to the drive chain, the pawl 23 on the chain shift means 12 rides up over the ratchet teeth 16 of the rotary member 17, so that the chain shift means swings free from the rotary member 17 without being subjected to the resistance to movement thereof. Hence, the chain shift means 12 swings to tension the drive chain $C$ only under the influence of the chain tension spring 14 spring force $F$.

In contrast, when the chain shift means 12 is subjected to a force in the reverse direction with respect to the working direction of the chain tension spring 14, the pawl 23 of the changeover frame 12 meshes with one of the ratchet teeth 16 so that the swinging motion of changeover frame 12 is resisted by the rotary member 17. As a result, the changeover frame 12 will not swing in the reverse direction unless it is subjected to a force greater than or equal to the force $F+f+FG$, defined above. Thus even when the chain tension spring 14 is of only limited strength, the chain is not unduly slackened as a result of vibrations.

In an alternative embodiment, the portions of the pawl and ratchet teeth may be reversed so that the pawl 23 is supported on the tubular shaft 15, and the rotary member 17 and friction plate 18 at the inner periphery of the tubular holder 22 as shown in Fig. 5. In this case, a washer 30 is interposed between the friction plate 18 and the rotary member 17, and a screw thread is provided at the inner peripheral surface of an open end of the tubular holder 22 and screw threadedly engaged with an annular nut 31. Although the pawl 23 is not shown in Fig. 5, a suitable general form and arrangement therefor may be readily deduced from the disclosure of Figs. 3 and 4.

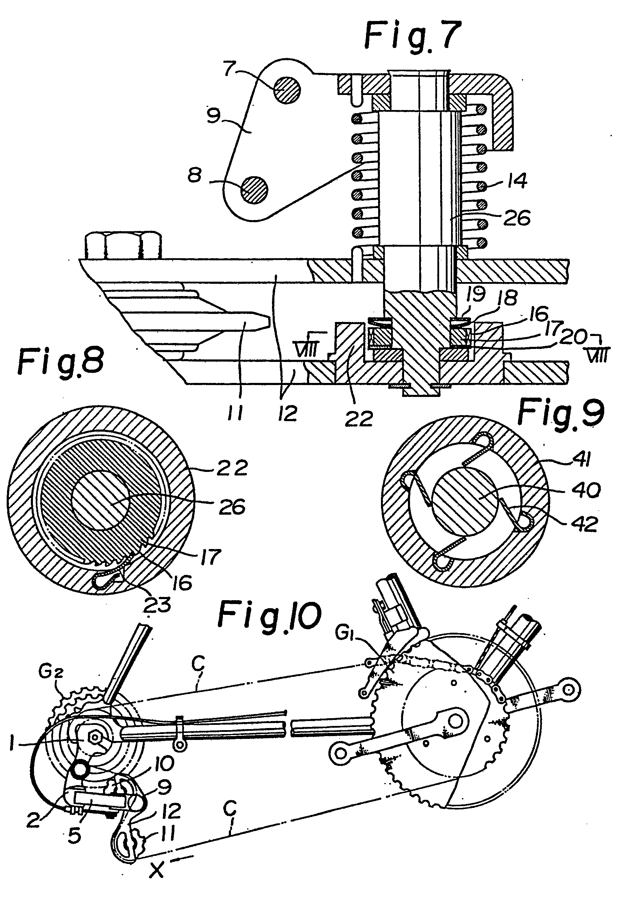

The tubular holder 22 in the abovedescribed embodiment could, as an alternative, be replaced by a dilated, larger diameter, portion 15$b$ of the tubular shaft 15 at the end of the latter adjacent the chain shift means 12 as shown in Fig. 6, with the rotary member 17 and friction plate 18 being supported at one of the inner periphery of the larger diameter portion 15$b$ and the outer periphery of the support shaft 13, and the pawl 23 on the other.

In the embodiment of Fig. 6, the rotary member 17 and friction plate 18 are supported at the outer peripheral surface support shaft 13, and the pawl 23 on the inner peripheral surface of larger diameter portion 15$b$. In addition, this arrangement is reversible in similar manner to that for the previous embodiment.

Furthermore, in Fig. 6, the washer 32 supporting the friction plate 18 is itself supported on the support shaft 13 by a fixing means 33, such as a snap ring, and the support shaft 13 is threaded at one axial end adjacent the chain shift means 12 as shown and a nut 34 is screw threadedly engaged therewith to support the rotary member 17 via a washer 35.

In yet another embodiment, the movable member 9 may fixedly support a support shaft 26 extending therefrom as shown in Figs. 7 and 8, with the chain shift means 12 being pivotally supported at the distal end of the support shaft 26. A friction plate 18 and a rotary member 17 having ratchet teeth 16 are rotatably supported on one of the support shaft 26 and the changeover frame 12, and a pawl 23 engageable with said ratchet teeth 16 being supported on the other, the friction plate 18 pressing against the rotary member 17 to apply a frictional resistance thereto.

In the embodiment of Figs. 7 and 8, the rotary member 17 and friction plate 18 are supported on the support shaft 26, and the pawl 23 on a cup-shaped or tubular holder 22 which in turn is secured to the chain shift means 12. This arrangement is also reversible in generally similar manner to that illustrated in Fig. 5.

Alternatively, the unidirectional rotary transmission of the abovedescribed embodiments may be replaced by any other suitable type of unidirectional rotary transmission.

Furthermore, instead of the abovedescribed type of unidirectional rotary transmission, one or more unidirectional resistance means 42 conveniently in the form of J-shaped members may be disposed between the outer periphery of a support shaft 40 mounted on one of the movable member 9 and chain shift means 12 and the inner periphery of a tubular shaft 41 surrounding the support shaft 40 and mounted on the other, as shown in Fig. 9 with each having one (arcuate) end held at the inner peripheral surface of the tubular shaft 41 and the other (straight) end contacting the outer peripheral surface of the support shaft 41 at an acute angle thereto so that in the case of clockwise rotation of the tubular shaft 41 relative to the support shaft 40 (or anti-clockwise movement of the latter), as viewed in Fig. 9, the free ends of the J-shaped members slip easily over the outer peripheral surface of the support shaft 40, whilst in the case of relative rotation in the reverse direction, said free ends tend to dig or bite into said outer peripheral surface of the support shaft, resulting in much greater resistance to relative rotation. As a result swinging movement of the chain shift means 12, in the working direction of the chain tension spring 14, is relatively light, whilst in the reverse direction with respect to the working direction thereof, swinging movement is relatively heavy.

In the construction shown in Fig. 9, each resistance means 42, could be in the form of a substantially solid member supported on the support shaft 40, with a spring means disposed for biasing resistance means 42 into contact with the support shaft 40, interposed between the resistance means 42 and the tubular shaft 41. The resistance means 42, could on the other hand be in the form of leaf springs similar to the pawl 23, which resiliently contact the outer peripheral surface of the support shaft 40 by virtue of their own inherent resilience.

## Claims

1. A derailleur for a cycle, for use in shifting a drive chain (C) to a desired sprocket of a multi-sprocket assembly (G₂), said derailleur comprising: a base member (2), two link members (5, 6) pivotally connected to said base member (2), and a movable member (9) pivotally connected to said link members (5, 6); a chain shift means (12) having two pulleys (10, 11) and pivotally mounted on said movable member (9); and a chain tension spring (14) disposed for acting between said chain shift means (12) and said movable member (9) for tensioning a said drive chain (C) in use of the derailleur; characterized in that there is provided a substantially unidirectional resistance means disposed for acting between the movable member (9) and said chain shift means (12) so as to apply a resistance to relative rotation therebetween substantially only in a reverse direction with respect to the biasing direction of said chain tension spring (14), whereby the chain shift means (12) is able to swing lightly in the biasing direction of the chain tension spring (14) but only heavily in the reverse direction with respect to the biasing direction of said chain tension spring (14).

2. A derailleur according to Claim 1, wherein said resistance means (16—18, 23) includes a unidirectional rotary transmission disposed between said chain shift means (12) and said movable member (9).

3. A derailleur according to Claim 2, wherein said unidirectional rotary transmission comprises a rotary member (17) having engagement recesses (16), and an engagement member (23) engageable unidirectionally with said engagement recesses (16); and a friction means (18) for applying a resistance against rotation of said rotary member (17); said rotary member (17) being mounted on one of said chain shift means (12) and said movable member (9), and said engagement member (23) being mounted on the other.

4. A derailleur according to Claim 3, wherein said movable member (9) has a tubular shaft (15) and said chain shift means (12) has a support shaft (13) mounted in said tubular shaft (15) and a tubular holder (22) disposed around said support shaft (13) and in which holder (22) is disposed an end of the tubular shaft (15) remote from the mounting member (9), and wherein said rotary member (17) is supported at one of the outer peripheral surface of said tubular shaft (15) and the inner peripheral surface of said holder (22), and said engagement member (23) is supported at the other.

5. A derailleur according to Claim 3, wherein said movable member (9) has a tubular shaft (15) and said chain shift means (12) has a support shaft (13) mounted in said tubular shaft (15), said tubular shaft (15) having a dilated end portion (15b), with said rotary member (17) being supported at one of the inner peripheral surface of said dilated end portion (15b) and the outer peripheral surface of said support shaft (13) opposite the inner peripheral surface of said dilated portion (15b) and said engagement member (23) is supported on the other.

6. A derailleur according to Claim 3, wherein said movable member (9) has a support shaft (26) pivotally supporting said chain shift means (12) said chain shift means (12) having a tubular holder (22) disposed around said support shaft (26), so that said rotary member (17) is supported on one of the outer peripheral surface of said support shaft (26) and the inner periphery of said tubular holder (22), and said engagement member is supported on the other.

7. A derailleur according to any one of Claims 3 to 6, wherein said engagement recesses are in the form of ratchet teeth (16) and said engagement member is a pawl (23).

8. A derailleur according to Claim 1, wherein is provided a support shaft (40) secured to one of said movable member (9) and chain shift means (12), and a tubular shaft (41) extending around said support shaft (40) is secured to the other, so that between the outer peripheral surface of said support shaft (40) and the inner peripheral surface of said tubular shaft (41) is interposed a plurality of resistance means disposed for applying a greater resistance to pivotal movement of said chain shift means (12) in a reverse direction with respect to the biasing direction of the chain tension spring (14) than in the same direction as said biasing direction.

9. A derailleur as claimed in Claim 8 wherein said resistance means are in the form of elongate members (42) each having one end secured to the inner peripheral surface of said tubular shaft (41) and its other end abutting the outer peripheral surface of the support shaft (40) and extending at an acute angle therefrom such that when the chain shift means (12) moves in the same direction as said biasing direction said other end slips over said outer peripheral surface whilst when the chain shift means (12) moves in the reverse direction, said end tends to bite or dig into said outer peripheral surface.

**Revendications**

1. Dérailleur de bicyclette, utilisable pour transférer une chaîne d'entraînement (C) sur un pignon désiré d'un ensemble de plusieurs pignons ($G_2$), ce dérailleur comprenant: une pièce de base (2), deux pièces de liaison (5, 6) reliées de façon pivotante à la pièce de base (2), et une pièce mobile (9) reliée de façon pivotante aux pièces de liaison (5, 6); un dispositif (12) de transfert de chaîne comportant deux poulies (10, 11) et monté de façon pivotante sur la pièce mobile (9); et un ressort (14) de tension de chaîne disposé pour agir entre le dispositif (12) de transfert de chaîne et la pièce mobile (9), de façon à tendre une dite chaîne d'entraînement (C) pendant l'utilisation du dérailleur; caractérisé en ce qu'il comporte des moyens exerçant une résistance sensiblement unidirectionnelle, disposés pour agir entre la pièce mobile (9) et le dispositif (12) de transfert de chaîne afin de créer une résistance à la rotation relative entre ces derniers sensiblement seulement dans un sens inverse par rapport au sens de rappel du ressort 14 de tension de chaîne, de sorte que le dispositif (12) de transfert de chaîne peut pivoter facilement dans le sens de rappel du ressort (14) de tension de chaîne mais seulement difficilement dans le sens inverse du sens de rappel du ressort (14) de tension de chaîne.

2. Dérailleur suivant la revendication 1, dans lequel les moyens de résistance (16, 18, 23) comprennent une transmission rotative unidirectionnelle placée entre le dispositif (12) de transfert de chaîne et la pièce mobile (9).

3. Dérailleur suivant la revendication 2, dans lequel la transmission rotative unidirectionnelle comprend une pièce tournante (17), comportant des logements d'enclenchement (16), et une pièce d'enclenchement (23) qui peut venir en prise unidirectionnellement avec les dits logements d'enclenchement (16); et des moyens à friction (18) pour exercer une résistance opposée à la rotation de la pièce tournante (17); cette pièce tournante (17) étant montée sur le dispositif (12) de transfert de chaîne ou sur la pièce mobile (9), et la pièce d'enclenchement (23) étant montée sur l'autre de ces deux parties.

4. Dérailleur suivant la revendication 3, dans lequel la pièce mobile (9) porte un axe tubulaire (15) et le dispositif (12) de transfert de chaîne porte un axe support (13), monté dans l'axe tubulaire (15), et une pièce de retenue tubulaire (22) disposée autour de l'axe support (13) et dans laquelle est placée une extrémité de l'axe tubulaire (15) éloignée de la pièce mobile (9), et dans lequel la pièce tournante (17) est supportée à la surface périphérique extérieure de l'axe tubulaire (15) ou à la surface périphérique intérieure de la pièce de retenue (22) et la pièce d'enclenchement (23) est supportée à l'autre de ces deux surfaces.

5. Dérailleur suivant la revendication 3, dans lequel la pièce mobile (9) porte un axe tubulaire (15) et le dispositif (12) de transfert de chaîne porte un axe support (13) monté dans l'axe tubulaire (15), cet axe tubulaire (15) comportant une partie d'extrémité élargie (15b), la pièce tournante (17) étant supportée à la surface périphérique intérieure de la dite partie d'extrémité élargie (15b) ou à la surface périphérique extérieure de l'axe support (13) opposée à la surface périphérique intérieure de ladite partie élargie (15b), et la pièce d'enclenchement (23) étant supportée par l'autre de ces surfaces.

6. Dérailleur suivant la revendication 3, dans lequel la pièce mobile (9) porte un axe support (26) supportant de façon pivotante le dispositif (12) de transfert de chaîne, ce dispositif (12) de transfert de chaîne comportant une pièce de retenue tubulaire (22) disposée autour de l'axe support (26), de sorte que la pièce tournante (17) est supportée sur la surface périphérique extérieure de l'axe support (26) ou sur la surface périphérique intérieure de la pièce de retenue tubulaire (22), et la pièce d'enclenchement est supportée sur l'autre de ces surfaces.

7. Dérailleur suivant l'une quelconque des revendications 3 à 6, dans lequel les logements d'enclenchement sont constitués par une denture à rochet (16) et la pièce d'enclenchement est un cliquet (23).

8. Dérailleur suivant la revendication 1, dans lequel un axe support (40) est fixé à la pièce mobile (9) ou au dispositif (12) de transfert de chaîne et un axe tubulaire (41), s'étendant autour de l'axe support (40), est fixé à l'autre de ces deux parties, de sorte qu'entre la surface périphérique extérieure de l'axe support (40) et la surface périphérique intérieure de l'axe tubulaire (41) sont interposés une pluralité d'éléments de résistance disposés pour exercer une plus grande résistance au mouvement de pivotement du dispositif (12) de transfert de chaîne dans un sens inverse par rapport au sens de rappel du ressort (14) de tension de chaîne, qu'au pivotement dans le même sens que ledit sens de rappel.

9. Dérailleur suivant la revendication 8, dans lequel les éléments de résistance sont constitués par des pièces allongées (42) fixées chacune, à une extrémité, à la surface périphérique intérieure de l'axe tubulaire (41) et en butée, à leur autre extrémité, contre la surface périphérique extérieure de l'axe support (40) et s'étendant suivant un angle aigu par rapport à cette surface de sorte que, lorsque le dispositif (12) de transfert de chaîne se déplace dans le même sens que le sens de rappel, ladite autre extrémité glisse sur la surface périphérique extérieure alors que, lorsque le dispositif (12) de transfert de chaîne se déplace en sens inverse, ladite extrémité tend à mordre ou à pénétrer dans cette surface périphérique extérieure.

## Patentansprüche

1. Fahrradgangschaltung für die Verschiebung einer Antriebskette (C) auf ein gewünschtes Zahnrad einer Mehr-Zahnrad-Anordnung (G$_2$) bestehend aus: einem Grundkörper (2); zwei Verbindungsteilen (5, 6), die schwenkbar mit dem Grundkörper (2) verbunden sind; und einem beweglichen Teil (9), das schwenkbar mit den Verbindungsteilen (5, 6) verbunden ist; einer Ketten-Verschiebe-Vorrichtung (12), die zwei Leiträder (10, 11) aufweist und schwenkbar am beweglichen Teil (9) befestigt ist; und einer Ketten-Spannfeder (14), die zwischen der Ketten-Verschiebe-Vorrichtung (12) und dem beweglichen Teil (9) angeordnet ist und wirkt, um die Antriebskette (C) bei der Benutzung der Schaltung zu spannen; dadurch gekennzeichnet, daß eine im wesentlichen einseitig gerichtete Widerstandvorrichtung derart zwischen dem beweglichen Teil (9) und der Ketten-Verschiebe-Vorrichtung (12) wirkend, vorgesehen ist, daß sie einen Widerstand im wesentlichen nur eine relative Drehbewegung zwischen diesen Teilen in der Gegenrichtung zur Vorspannung der Ketten-Spannfeder (14) entgegensetzt, wodurch die Ketten-Verschiebe-Vorrichtung (12) leicht in die Richtung der Vorspannung der Ketten-Spannfeder (14), aber nur schwer in die der Vorspannung der Ketten-Spannfeder (14), entgegengesetzte Richtung schwingen kann.

2. Gangschaltung nach Anspruch 1, dadurch gekennzeichnet, daß die Widerstandsvorrichtung (16—18, 23) eine einseitig gerichtete Drehkupplung aufweist, die zwischen der Ketten-Verschiebe-Vorrichtung (12) und dem beweglichen Teil (9) angeordnet ist.

3. Gangschaltung nach Anspruch 2, dadurch gekennzeichnet, daß die einseitig gerichtete Drehübertragung ein Drehteil (17) mit Eingriffsausnehmungen (16) und ein Eingriffsteil (23) aufweist, das in einer Richtung mit den Eingriffsausnehmungen (16) in Eingriff kommt; und eine Reibungsvorrichtung (18) zum Ausüben eines Widerstandes gegen eine Drehbewegung des Drehteils (17); wobei das Drehteil (17) an der Ketten-Verschiebe-Vorrichtung (12) oder dem beweglichen Teil (9) und das Eingriffsteil (23) am anderen der beiden befestigt ist.

4. Gangschaltung nach Anspruch 3, dadurch gekennzeichnet, daß das bewegliche Teil (9) eine Hohlwelle (15) und die Ketten-Verschiebe-Vorrichtung (12) eine Stützwelle (13), die in der Hohlwelle (15) untergebracht ist und einen rohrförmigen Halter (22) aufweist, der um die Stützwelle (12) herum angeordnet ist, wobei in dem Halter (22) ein Ende der Hohlwelle (15), welches vom Einbauteil (9) entfernt liegt, untergebracht ist, wobei das Drehteil (17) entweder an der äußeren Umfangsfläche der Hohlwelle (15) oder an der inneren Umfangsfläche des Halters (22) gelagert ist und das Eingriffsteil (23) an der anderen dieser beiden Flächen.

5. Gangschaltung nach Anspruch 3, dadurch gekennzeichnet, daß das bewegliche Teil (9) eine Hohlwelle (15) und die Ketten-Verschiebe-Vorrichtung (12) eine Stützwelle (13) aufweist, die in der Hohlwelle (15) angeordnet ist, wobei die Hohlwelle (15) einen erweiterten Endteil (15b) aufweist, wobei das Drehteil (17) entweder an der inneren Umfangsfläche des ausgeweiteten Endteils (15b) oder an der äußeren Umfangsfläche der Stützwelle (13) gegenüber der inneren Umfangsfläche des ausgeweiteten Teils (15b) gelagert ist und das Eingriffsteil (23) getragen wird von der anderen der Flächen.

6. Gangschaltung nach Anspruch 3, dadurch gekennzeichnet, daß das bewegliche Teil (9) eine Stützwelle (26) aufweist, die die Ketten-Verschiebe-Vorrichtung (12) schwenkbar trägt, wobei die Ketten-Verschiebe-Vorrichtung (12) einen rohrförmigen Halter (22) aufweist, der um die Stützwelle (26) herum angeordnet ist, so daß das Drehteil (17) entweder an der äußeren Umfangsfläche der Trägerwelle (26) oder der inneren Umfangsfläche des rohrförmigen Halters (22) gelagert ist und das Eingriffsteil sich an der anderen der beiden Flächen abstützt.

7. Gangschaltung nach einem der Ansprüche 3 bis 6, dadurch gekennzeichnet, daß die Eingriffsausnehmungen die Form von Ratschenzähnen (16) haben und das Eingriffsteil eine Sperrklinke (23) ist.

8. Gangschaltung nach Anspruch 1, gekennzeichnet durch eine Trägerwelle (40), die entweder am beweglichen Teil (9) oder der Ketten-Verschiebe-Vorrichtung (12) befestigt ist, und durch eine Hohlwelle (41), die sich um die Stützwelle (40) herum erstreckt und an der Ketten-Verschiebe-Vorrichtung (12) oder an dem beweglichen Teil (9) befestigt ist, so daß zwischen der äußeren Umfangsfläche der Stützwelle (40) und der inneren Umfangsfläche der Hohlwelle (41) eine Vielzahl von Widerstandsvorrichtungen eingefügt ist zum Ausüben einer größeren Widerstandskraft gegen eine Schwenkbewegung der Ketten-Verschiebe-Vorrichtung (12) in eine Richtung entgegengesetzt der Vorspannrichtung der Ketten-Spannfeder (14), als gegen eine Schwenkbewegung in die Vorspannrichtung.

9. Gangschaltung nach Anspruch 8, dadurch gekennzeichnet, daß die Widerstandsvorrichtung aus länglichen Teilen (42) besteht, von denen jeweils ein Ende an der inneren Umfangsfläche der Hohlwelle (41) gelagert ist und das andere Ende an der äußeren Umfangsfläche der Stützwelle (40) anliegt und sich unter einem spitzen Winkel dazu erstreckt, so daß, wenn die Ketten-Verschiebe-Vorrichtung (12) sich in der Vorspannrichtung bewegt, dieses andere Ende über die äußere Umfangsfläche gleitet, während wenn die Ketten-Verschiebe-Vorrichtung (12) sich in die entgegengesetzte Richtung bewegt, dieses Ende sich in die äußere Umfangsfläche einzubohren oder -graben versucht.

Fig.1

Fig.2

Fig.3

# Fig. 4

# Fig. 5

# Fig. 6

Fig.7

Fig.8

Fig.9

Fig.10